# EUROPEAN PATENT SPECIFICATION

(11) **EP 2 763 839 B1**
(45) Date of publication and mention of the grant of the patent: **02.08.2017**
(21) Application number: 12788257.9
(22) Date of filing: 04.10.2012
(51) Int. Cl.: B29C 65/10, B29C 65/18, B29C 65/72, B29C 65/78, B65B 9/04, B65B 51/16, B65H 39/16, B29C 65/30

(54) **DEVICE TO PREHEAT A TAPE AND CONNECTED METHOD OF APPLICATION**
VORRICHTUNG ZUM VORWÄRMEN EINES BANDES UND ENTSPRECHENDES VERFAHREN ZUR ANWENDUNG
DISPOSITIF POUR LE PRÉCHAUFFAGE D'UN RUBAN ET PROCÉDÉ D'APPLICATION ASSOCIÉ

(30) Priority: 07.10.2011 IT MI20111835
(43) Date of publication of application: 13.08.2014
(73) Proprietor: I.M.A. Industria Macchine Automatiche S.p.A., 40064 Ozzano dell'Emilia (BO) (IT)
(72) Inventor: MENZOLINI, Massimo, 48014 Castel Bolognese (IT)
(74) Representative: Petraz, Gilberto Luigi
(86) International application number: PCT/IB2012/001976
(87) International publication number: WO 2013/050864

(56) References cited:
- JP-A- 2000 001 260
- US-A- 5 806 277
- US-A- 6 076 257
- US-A1- 2002 084 380
- US-A1- 2006 049 173

## Description

### FIELD OF THE INVENTION

The present invention concerns the use of preheating means to preheat sealing tapes connected to containing elements to be sealed. The present invention also concerns the connected method.

### BACKGROUND OF THE INVENTION

It is known how, in the technique of producing blisters and other similar blister-type products, a sealing tape is applied continuously so as to isolate the compartments of the blisters, with their contents, from the outside environment. This technique is also used to seal different types of containing elements suitable both for solid and liquid substances; among these, for example, there are containers for medicines, food supplements such as vitamins and other medical substances and containers for food.

In this technique, a heated metal pressure roller heats the sealing tape before the latter enters into contrast with another roller, a drawing roller for example, of a tape where the blisters are. The sealing tape must be heated to a temperature such as to bring the tape and/or the layer of glue present on it, to the right temperature. Such temperature is that which guarantees a stable sealing following the subsequent pressure between the drawing or contrast roller and the pressure roller. It has been found that, up to a certain feed speed of the tape, the pressure roller is able to transmit the correct amount of heat energy to generate the desired effect.

One disadvantage concerns the relation between the increase in the feed speed of the tape and the surface temperature of the pressure roller. It has been found that, in order to use higher feed speeds aimed at increasing productivity, it is not possible to further raise the surface temperature of the pressure roller. This would cause problems both for the sealing tape and for the sealing itself.

In the patent application JP2000001260 A the sealing tape is pre-heated by a hot roller before being joined to the blisters tape by pressure rollers. From the patent application US-A-4,310,365 a pressure roller with a rubber surface is known to which a heating panel is associated. The panel has the function of heating the surface portion of the rubber covering the roller, the insulating tape which covers the conductor plates and the conductor plates themselves. Furthermore, by heating the insulating tape, the panel enables the morphological adaption of the insulating tape to the corrugated surface of the layer to be insulated. In other words, the action of the panel does not allow the conductor plates to move laterally, thus maintaining a desired reciprocal geometric position. The reciprocal geometric position is essential for the correct behavior of the multi-channel tape. This system, due to its configuration, the way it works and its purposes, is not usable for the aims of the present invention. From the patent application US 2006/0049173 A1 or the patent US5806277 A, it is also known to provide, in cooperation with the sealing roller, a heating panel which is positioned at the front of the sealing roller, but which is autonomous from the latter. This known technique, as well as creating downtimes for the maintenance operations, does not guarantee that the sealing tape stays perfectly in position.

The patent US6076257 A discloses the use of a guide structure to guide a film layer onto the surface of a panel before being bonded thereto by compression rollers. The Applicant thus found himself in the position of having to study and create a device and method to obtain a secure and continuous seal even at high speeds of production adopted by sealing machines in general.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a device for preheating tapes according to the present invention consists of a heated metal pressure roller, or sealing roller, cooperating with a tape to be sealed and a sealing tape heated by the sealing roller and coming from a reel. From the union of the latter two elements the sealed product is obtained.

According to the present invention, a panel or plate, heated and/or heating, is directly associated to the sealing roller in order to heat the sealing tape. The panel is provided at the nearest point possible to the point or area of cooperation between the pressure roller and the contrast roller, very near to the sealing zone of the sealing tape by the sealing roller.

According to a first embodiment of the present invention, the reciprocal position between the heated and/or heating panel and the sealing roller remains fixed, whatever the angular position that the sealing roller assumes.

According to a first embodiment of the panel, this has a shape and a length such as to be able to be inserted as near as possible to the sealing zone.

According to one embodiment of the invention, the panel has a sliding surface for the sealing tape which acts as the heat exchange surface.

In one form of embodiment of the present invention, the sliding surface of the panel has means or elements with divarication or tensioning functions, in a direction transverse to the direction of feed of the sealing tape. The divarication means are disposed converging from one side and the other with respect to a center line of the sliding surface of the panel. These elements, keeping the sealing tape taut, serve to prevent the generation of irregular and uneven longitudinal behaviors in the sealing tape, which would cause imperfections in the sealing.

According to a further embodiment of the panel, this has heating elements inside it, which elements are, for example, electric resistances that can be inserted inside it.

According to a variant, which can be used together with the solution described above, channels of reduced sizes are made in the panel, to emit air which is introduced into the panel by means of at least an inlet pipe. The air can be heated to the desired temperature or the ambient temperature according to requirements. The channels end on the surface of the panel. The channels, on exit, can be flared so as to better distribute the pressure on the sealing tape and on the tape to be sealed and thus prevent undesired irregular profiles.

According to the invention, the panel must take the sealing tape to a temperature, which, later associated to the increase in temperature supplied by the heated metal pressure roller, ensures a complete and secure seal.

According to a variant, the panel transmits to the sealing tape the quantity of heat needed to reach the temperature of the pressure roller. In this case, the function of sealing rests mainly with the heated metal pressure roller.

The present invention also concerns a method of applying a sealing tape on containing compartments, in which a sealing is performed in a sealing zone between a heated metal roller, or sealing roller, and drawing and/or contrast means, for example a roller.

In accordance with the method of the present invention, near the sealing zone at least the sealing tape receives a heat contribution suitable to take it to the desired temperature, said contribution being obtained by means of a panel, said heat contribution being associated to a transverse divarication or tensioning action of the sealing tape.

### DESCRIPTION OF THE DRAWINGS

These and other characteristics of the present invention will become apparent from the following description of a preferential form of embodiment, given as a non-restrictive example with reference to the attached drawings wherein:
- fig. 1 is a view showing the normal application system of a sealing tape, in which the preheating device according to the present invention is applied, in an operating condition in which the metal heated pressure roller, or sealing roller, is adjacent to the contrast and/or drawing roller.
- fig. 2 is an example of fig. 1 in a non-operating condition, in which the metal heated pressure roller, or sealing roller, is detached from the contrast and/or drawing roller;
- fig. 3 is an enlarged and sectioned detail of one form of embodiment of a panel of the device of the present invention;
- figs. 3a, 3b, 3c, 3d, 3e, 3f show possible examples of flaring of the exit channels for the air of the panel in fig. 3;
- fig. 4 shows the panel of the device of the present invention with one possible form of embodiment of the divarication elements;
- fig. 5 shows a three-dimensional view of the device of the present invention.

Functional parts that perform the same functions have the same reference numbers.

### DESCRIPTION OF SOME FORMS OF EMBODIMENT

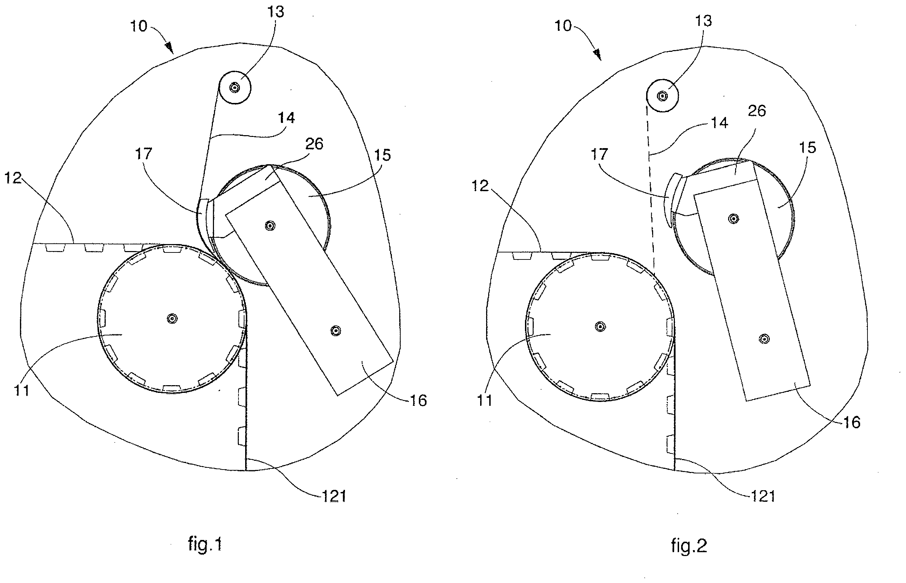

With reference to fig. 1, a device 10 to preheat applied tape is shown, in this case applied for sealing tapes with blisters.

According to the invention, the device 10 works in cooperation with a tape 12 bearing the blisters. The device 10, in this case, consists of a heated and/or heating metal roller, or sealing roller, 15, which also has a pressure function, and a contrasting drawing roller 11 associated to the tape 12. The tape 12 to be sealed and the sealing tape 14, unwound from a reel 13, converge at the point, area or line of cooperation between said rollers 11 and 15. The point, area or line of cooperation corresponds to the sealing zone.

The sealing occurs as a result of the double action of pressure and heating exerted by the sealing roller 15, associated to the correct temperature of the sealing tape 14. In the part immediately before, that is upstream of, the sealing zone, with respect to the normal direction of feed of the sealing tape 14, a heated and/or heating panel or plate 17 is provided, able to increase the temperature of the sealing tape 14.

The sealing tape 14 is normally held in tension, in a known manner, while the sealing roller 15 is moved and positioned by a movement arm 16.

In particular, in fig. 1, the device 10 is in an operating condition in which the sealing roller 15 is adjacent to the drawing roller 11, cooperating for the sealing.

With reference to fig. 2, a possible non-operating condition of the system is shown, in which the sealing roller 15 is moved by the movement arm 16 with respect to the sealing position adjacent to the drawing roller 11 of fig. 1.

It should be noted that, thanks to a support 26 associated to the movement arm 16, the reciprocal position of the panel 17 and the sealing roller 15 remains in any case constant, that is, fixed.

In this case, the support 26 is solid with one end of the movement arm 16. Therefore, in the example shown, the panel 17 is fixed to the support 26 and the sealing roller 15 is constrained to the movement arm 16.

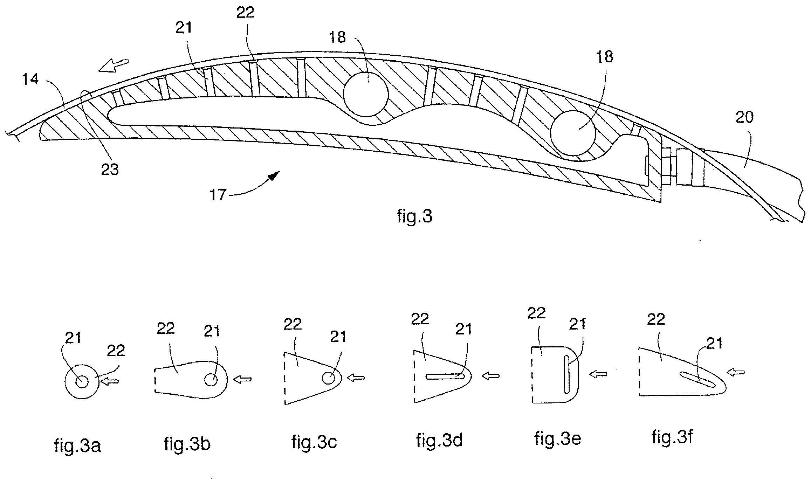

With reference to fig. 3, the panel 17 is shown which, according to the present invention, has a sliding surface 23 for the sealing tape 14, which acts as a heat exchange surface.

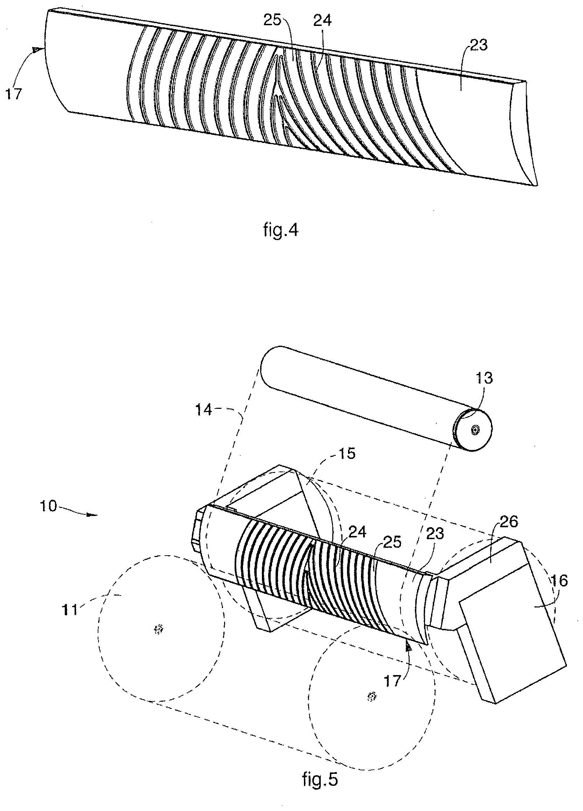

The sliding surface 23 is provided, according to the present invention, with divarication or tensioning means or elements, 24 (fig. 4).

With reference to fig. 4, the panel 17 is shown comprising the cited divarication or tensioning means, or elements 24, provided on the sliding surface 23 and configured, in particular, to maintain the sealing tape 14 laterally taut.

In some forms of embodiment, the divarication elements 24 comprise at least two groups of divarication elements 24, which are disposed symmetrically on one side and the other with respect to a center line of the sliding surface 23.

Moreover, the divarication elements 24 are disposed inclined and converging toward the center line, in correspondence to which the ends of the divarication elements 24 are substantially adjacent (figs. 4 and 5). With reference to figs. 4 and 5, the divarication elements 24 are disposed for example converging upward. For example, the divarication elements 24 are configured in a herringbone pattern.

In particular the divarication elements 24 put the sealing tape 14 under tension in a direction transverse to its direction of feed, avoiding puckers and wrinkles due to the sudden increase in heat.

The divarication elements 24, configured as profiles in relief protruding with respect to the sliding surface 23, can have, with respect to the axis of feed of the sealing tape 14, different angles depending on the characteristics of the sealing tape 14 and/or its feed speed. The divarication elements 24 can have flat support surfaces 25 (fig. 5), or only shaped ridges. The divarication elements 24 can also have a constant or a variable development, for example, curvilinear, or cuspidal.

The provision of the divarication elements 24 allows to perform, in some forms of embodiment of the present invention, also at high speeds of feed of the tape 12 with blisters and of the sealing tape 14, and with a direction of feed tangent to the rollers 11 and 15, applying a sufficient tension to the sealing tape 14 in order to have lateral stability and an adequate contact pressure with the panel 17, and therefore an adequate transmission of heat, preventing, as indicated above, the formation of unwanted puckers or wrinkles.

The panel 17, in this specific case, also comprises heating elements 18 and outlet channels 21 of the air introduced therein by the inlet pipe 20. The outlet channels 21 reach the sliding surface 23 of the panel 17. The air can have the desired temperature. Moreover, the air can cooperate with the heating elements 18. If there is heated air, or a coexistence of heated air and the panel 17 heated by its own heating elements, the sealing roller 15 can also have a reduced surface temperature. The outlet channels 21, advantageously in the exit zone, have flarings 22 to improve the distribution of exiting air. The flarings 22 can also extend downstream of the respective outlet channels 21 and accompany the sealing tape 14. Figs. 3a to 3f show possible example embodiments of flarings 22. In fig. 3f, for example, the outlet channels 21 contribute to the divarication of the sealing tape 14 as above.

The panel 17 will advantageously be made of metal, but it can also be made of other material, ceramic for example, or comparable, or metal covered by ceramic material or similar, or vice versa.

Fig. 5 shows an example of embodiment of the device 10, which comprises two spaced movement arms 16, between which the sealing roller 15 (indicated for convenience with a broken line) is attached to corresponding supports 26. The drawing roller 11 (this, too, is shown for convenience with a broken line) is located in a coordinated position with respect to the sealing roller 15, so as to be able to act in cooperation with the latter on the sealing tape 14 (shown by a broken line in fig. 5) fed from the reel 13 and on the tape 12, not shown here. The panel 17 of the present invention, in this case attached to the two supports 26, is disposed externally to the sealing roller 15, substantially between the latter and the drawing roller 11.

It is clear that modifications and/or additions of parts and/or steps may be made to the preheating device 10 and the corresponding method as described heretofore, without departing from the scope of the claims. It is also clear that, although the present invention has been described with reference to some specific examples, a person of skill in the art shall certainly be able to achieve many other equivalent forms of preheating device and corresponding method, having the characteristics as set forth in the claims and hence all coming within the field of protection defined thereby.

## Claims

1. Device to preheat a tape (12) suitable to be used to seal containing compartments with a sealing tape (14), in a sealing zone between a heated metal roller, or sealing roller (15), and drawing and/or contrast means (11), for example a roller, which comprises a heated and/or heating panel (17) suitable to be disposed near the sealing zone of the sealing tape (14) by the sealing roller (15), said panel (17) being suitable to supply heat energy at least to the sealing tape (14) and having a sliding surface (23) for the sealing tape (14) which acts as a heat exchange surface, **characterized in that** said sliding surface (23) has divarication means (24) disposed converging from one side and the other with respect to a center line of the sliding surface (23), said divarication means (24) being able to act in a direction transverse to the direction of feed of the sealing tape (14), said divarication means (24) comprising profiles in relief, protruding with respect to the sliding surface (23).

2. Device as in claim 1, **characterized in that** the divarication means (24) are configured in a herringbone pattern.

3. Device as in claim 1 or 2, **characterized in that** the divarication means (24) have a flat support surface (25).

4. Device as in claim 1 or 2 **characterized in that** the divarication means (24) have a cusp-type development.

5. Device as in any claim hereinbefore, **characterized in that** said divarication means (24) comprise at least two groups of divarication elements (24), which are disposed symmetrically on one side and the other with respect to a center line of the sliding surface (23).

6. Device as in any claim hereinbefore, **characterized in that** said divarication means (24) are disposed converging upward.

7. Device as in any claim hereinbefore, **characterized in that** it comprises a movement arm (16) configured for moving and positioning the sealing roller (15).

8. Device as in any claim hereinbefore, **characterized in that** the panel (17) and the sealing roller (15) have a fixed reciprocal position.

9. Device as in claims 7 and 8, **characterized in that** a support (26) associated to the movement arm (16) is provided, configured for defining the fixed reciprocal position of the panel (17) and the sealing roller (15).

10. Device as in claim 9, **characterized in that** said support (26) is solid with one end of the movement arm (16).

11. Device as in claim 9 or 10, **characterized in that** the panel (17) is fixed to the support (26) and the sealing roller (15) is constrained to the movement arm (16).

12. Device as in any claim hereinbefore, **characterized in that** the panel (17) has heating elements (18) inside it.

13. Device as in any claim hereinbefore, **characterized in that,** cooperating with its inner part, the panel (17) has at least an air inlet pipe (20) and at least an outlet channel (21) cooperating with the surface of the sealing tape (14) which slides on the panel (17).

14. Device as in claim 13, **characterized in that** the outlet channel (21) has flared means (22).

15. Device as in any claim hereinbefore, **characterized in that** the panel (17) is made of a heat transmitting material.

16. Device as in any claim hereinbefore, **characterized in that** the panel (17) is made of a metal material.

17. Device as in any claim from 1 to 15, **characterized in that** the panel (17), or at least its sliding surface (23), is made of ceramic material or material similar thereto.

18. Heating panel for a device to preheat sealing tape (14) applicable to a sealing device, which is suitable to supply heat energy at least to the sealing tape (14) and has a sliding surface (23) for the sealing tape (14) which acts as a heat exchange surface, **characterized in that** said sliding surface (23) has divarication means (24) disposed converging from one side and the other with respect to a center line of the sliding surface (23), said divarication means (24) being able to act in a direction transverse to the direction of feed of the sealing tape (14), said divarication means (24) comprising profiles in relief, protruding with respect to the sliding surface (23).

19. Method to apply a sealing tape (14) on containing compartments, said sealing occurring in a sealing zone between a metal heated roller, or sealing roller (15), and drawing and/or contrast means (11), for example a roller, wherein near the sealing zone at least the sealing tape (14) receives a contribution of heat suitable to take it to the desired temperature, said contribution being obtained by means of a panel (17), **characterized in that** said contribution of heat is associated with an action of transverse divarication or tensioning of the sealing tape (14).

20. Method as in claim 19, **characterized in that** the positioning of the sealing roller (15) automatically takes the panel (17) with it.

## Patentansprüche

1. Vorrichtung zum Vorwärmen eines Bandes (12), die zur Verwendung beim Abdichten von Behältern mit einem Dichtungsband (14) in einer Dichtungszone zwischen einer erwärmten metallischen Walze, oder Dichtungswalze (15), und Zeichen- und/oder Kontrastmitteln (11), zum Beispiel einer Walze, geeignet ist und die eine erwärmte und/oder wärmende Platte (17) umfasst, die geeignet ist, um nahe der Dichtungszone des Dichtungsbandes (14) durch die Dichtungswalze (15) angeordnet zu sein, wobei die Platte (17) geeignet ist, um zumindest dem Dichtungsband (14) Wärmeenergie zuzuführen, und eine Gleitfläche (23) für das Dichtungsband (14) hat, die als Wärmetauschfläche (23) agiert,
**dadurch gekennzeichnet, dass**
die Gleitfläche (23) Spreizmittel (24) hat, die von einer Seite und der anderen in Bezug auf eine Mittellinie der Gleitfläche (23) konvergierend angeordnet sind, wobei die Spreizmittel (24) in einer Richtung quer zur Förderrichtung des Dichtungsbandes (14) agieren können, wobei die Spreizmittel (24) Profile in Relief umfassen, die in Bezug auf die Gleitfläche (23) vorstehen.

2. Vorrichtung nach Anspruch 1, **dadurch gekennzeichnet, dass** die Spreizmittel (24) in einem Fischgrätenmuster konfiguriert sind.

3. Vorrichtung nach Anspruch 1 oder 2, **dadurch gekennzeichnet, dass** die Spreizmittel (24) eine flache Auflagefläche (25) haben.

4. Vorrichtung nach Anspruch 1 oder 2, **dadurch gekennzeichnet, dass** die Spreizmittel (24) eine höckerartige Ausbildung haben.

5. Vorrichtung nach einem der vorhergehenden Ansprüche, **dadurch gekennzeichnet, dass** die Spreizmittel (24) mindestens zwei Gruppen von Spreizelementen (24) umfassen, die symmetrisch an einer Seite und der anderen in Bezug auf eine Mittellinie der Gleitfläche (23) angeordnet sind.

6. Vorrichtung nach einem der vorhergehenden Ansprüche, **dadurch gekennzeichnet, dass** die Spreizmittel (24) nach oben konvergierend angeordnet sind.

7. Vorrichtung nach einem der vorhergehenden Ansprüche, **dadurch gekennzeichnet, dass** sie einen Bewegungsarm (16) umfasst, der zum Bewegen und Positionieren der Dichtungswalze (15) konfiguriert ist.

8. Vorrichtung nach einem der vorhergehenden Ansprüche, **dadurch gekennzeichnet, dass** die Platte (17) und die Dichtungswalze (15) eine gegenseitig feststehende Position haben.

9. Vorrichtung nach den Ansprüchen 7 und 8, **dadurch gekennzeichnet, dass** eine Stütze (26) bereitgestellt ist, die dem Bewegungsarm (16) zugeordnet und zum Definieren der gegenseitig feststehenden Position der Platte (17) und der Dichtungswalze (15) konfiguriert ist.

10. Vorrichtung nach Anspruch 9, **dadurch gekennzeichnet, dass** die Stütze (26) mit einem Ende des Bewegungsarms (16) fest ist.

11. Vorrichtung nach Anspruch 9 oder 10, **dadurch gekennzeichnet, dass** die Platte (17) an der Stütze (26) befestigt und die Dichtungswalze (15) durch den Bewegungsarm (16) beschränkt ist.

12. Vorrichtung nach einem der vorhergehenden Ansprüche, **dadurch gekennzeichnet, dass** die Platte (17) wärmende Elemente (18) in ihrem Inneren hat.

13. Vorrichtung nach einem der vorhergehenden Ansprüche, **dadurch gekennzeichnet, dass** die Platte (17) beim Zusammenwirken mit ihrem inneren Teil mindestens ein Einlassrohr (20) und mindestens ein Auslasskanal (21) hat, die mit der Fläche des Dichtungsbandes (14), das auf der Platte (17) gleitet, zusammenwirken.

14. Vorrichtung nach Anspruch 13, **dadurch gekennzeichnet, dass** der Auslasskanal (21) aufgebördelte Mittel (22) hat.

15. Vorrichtung nach einem der vorhergehenden Ansprüche, **dadurch gekennzeichnet, dass** die Platte (17) aus einem wärmeübertragenden Material besteht.

16. Vorrichtung nach einem der vorhergehenden Ansprüche, **dadurch gekennzeichnet, dass** die Platte (17) aus einem metallischen Material besteht.

17. Vorrichtung nach einem der Ansprüche 1 bis 15, **dadurch gekennzeichnet, dass** die Platte (17) oder zumindest ihre Gleitfläche (23) aus einem keramischen Material oder einem dem ähnlichen Material besteht.

18. Wärmende Platte für eine Vorrichtung zum Vorwärmen eines Dichtungsbandes (14), die mit einer Dichtungsvorrichtung verwendet werden kann und geeignet ist, zumindest dem Dichtungsband (14) Wärmeenergie zuzuführen, und eine Gleitfläche (23) für das Dichtungsband (14) hat, die als Wärmetauschfläche agiert,
**dadurch gekennzeichnet, dass**
die Gleitfläche (23) Spreizmittel (24) hat, die von einer Seite und der anderen in Bezug auf eine Mittellinie der Gleitfläche (23) konvergierend angeordnet sind, wobei die Spreizmittel (24) in einer Richtung quer zur Förderrichtung des Dichtungsbandes (14) agieren können, wobei die Spreizmittel (24) Profile in Relief umfassen, die in Bezug auf die Gleitfläche (23) vorstehen.

19. Verfahren zum Aufbringen eines Dichtungsbandes (14) auf Behältern, wobei die Dichtung in einer Dichtungszone zwischen einer erwärmten metallischen Walze, oder Dichtungswalze (15), und Zeichen- und/oder Kontrastmitteln (11), zum Beispiel einer Walze, erfolgt, wobei nahe der Dichtungszone mindestens ein Dichtungsband (14) einen Wärmebeitrag empfängt, der geeignet ist, um es auf die gewünschte Temperatur zu bringen, wobei der Beitrag mittels einer Platte (17) erhalten wird,
**dadurch gekennzeichnet, dass**
der Wärmebeitrag mit einer Aktion verbunden ist, bei der das Dichtungsband (14) quer gespreizt oder gespannt wird.

20. Verfahren nach Anspruch 19, **dadurch gekennzeichnet, dass** das Positionieren der Dichtungswalze (15) automatisch die Platte (17) mitnimmt.

## Revendications

1. Dispositif pour le préchauffage d'un ruban (12) permettant d'assurer l'étanchéité de compartiments de confinement à l'aide d'un ruban d'étanchéité (14) dans une zone d'étanchéité entre un rouleau métallique chauffé, ou rouleau d'étanchéité (15), et des moyens d'entraînement et/ou de contraste (11), par exemple un rouleau, comprenant une dalle chauffée et/ou chauffante (17) conçue pour être placée près de la zone d'étanchéité du ruban d'étanchéité (14) par le rouleau d'étanchéité (15), ladite dalle (17) étant apte à alimenter de l'énergie thermique au moins au ruban d'étanchéité (14) et comportant une surface de coulissement (23) pour le ruban d'étanchéité (14), qui fait fonction de surface d'échange thermique, **caractérisé en ce que** ladite surface de coulissement (23) comporte des moyens d'écartement (24) agencés convergents d'un côté à l'autre par rapport à une ligne médiane de la surface de coulissement (23), lesdits moyens d'écartement (24) étant aptes à agir dans une direction transversale à la direction d'avance du ruban d'étanchéité (14), lesdits moyens d'écartement (24) comprenant des profils en relief, faisant saillie par rapport à la surface de coulissement (23).

2. Dispositif selon la revendication 1, **caractérisé en ce que** les moyens d'écartement (24) sont agencés en chevrons.

3. Dispositif selon la revendication 1 ou 2, **caractérisé en ce que** les moyens d'écartement (24) comportent une surface de support plate (25).

4. Dispositif selon la revendication 1 ou 2, **caractérisé en ce que** les moyens d'écartement (24) ont un profil cuspidé.

5. Dispositif selon n'importe laquelle des revendications précédentes, **caractérisé en ce que** lesdits moyens d'écartement (24) comprennent au moins deux groupes d'éléments d'écartement (24), agencés de façon symétrique sur les deux côtés par rapport à une ligne médiane de la surface de coulissement (23).

6. Dispositif selon n'importe laquelle des revendications précédentes, **caractérisé en ce que** lesdits moyens d'écartement (24) sont agencés de manière à converger vers le haut.

7. Dispositif selon n'importe laquelle des revendications précédentes, **caractérisé en ce qu'**il comprend un bras de déplacement (16) conçu pour déplacer et positionner le rouleau d'étanchéité (15).

8. Dispositif selon n'importe laquelle des revendications précédentes, **caractérisé en ce que** la dalle (17) et le rouleau d'étanchéité (15) ont une position réciproque fixe.

9. Dispositif selon les revendications 7 et 8, **caractérisé en ce qu'**il comporte un support (26) associé au bras de déplacement (16), conçu pour définir la position réciproque fixe de la dalle (17) et du rouleau d'étanchéité (15).

10. Dispositif selon la revendication 9, **caractérisé en ce que** ledit support (26) est solidaire à une extrémité du bras de déplacement (16).

11. Dispositif selon la revendication 9 ou 10, **caractérisé en ce que** la dalle (17) est fixée au support (26) et le rouleau d'étanchéité (15) est contraint au bras de déplacement (16).

12. Dispositif selon n'importe laquelle des revendications précédente, **caractérisé en ce que** la dalle (17) a des éléments chauffants (18) à son intérieur.

13. Dispositif selon n'importe laquelle des revendications précédentes, **caractérisé en ce qu'**en coopération avec sa partie intérieure, la dalle (17) possède au moins un tuyau d'amenée d'air (20) et au moins un canal de sortie (21) coopérant avec la surface du ruban d'étanchéité (14) coulissant sur la dalle (17).

14. Dispositif selon la revendication 13, **caractérisé en ce que** le canal de sortie (21) comporte des moyens évasés (22).

15. Dispositif selon n'importe laquelle des revendications précédentes, **caractérisé en ce que** la dalle (17) est constituée d'un matériau conducteur thermique.

16. Dispositif selon n'importe laquelle des revendications précédentes, **caractérisé en ce que** la dalle (17) est constituée d'un matériau métallique.

17. Dispositif selon n'importe laquelle des revendications 1 à 15, **caractérisé en ce que** la dalle (17), ou au moins sa surface de coulissement (23), est constituée d'un matériau céramique ou d'un matériau similaire.

18. Dalle chauffante pour un dispositif pour le préchauffage d'un ruban d'étanchéité (14) applicable à un dispositif d'étanchéité, laquelle est apte à alimenter de l'énergie thermique au moins au ruban d'étanchéité (14) et comporte une surface de coulissement (23) pour le ruban d'étanchéité (14), qui fait fonction de surface d'échange thermique, **caractérisé en ce que** ladite surface de coulissement (23) comporte des moyens d'écartement (24) agencés convergents d'un côté à l'autre par rapport à une ligne médiane de la surface de coulissement (23), lesdits moyens d'écartement (24) étant aptes à agir dans une direction transversale à la direction d'avance du ruban d'étanchéité (14), lesdits moyens d'écartement (24) comprenant des profils en relief, faisant saillie par rapport à la surface de coulissement (23).

19. Procédé d'application d'un ruban d'étanchéité (14) sur des compartiments de confinement, ladite étanchéité étant assurée dans une zone d'étanchéité entre un rouleau métallique chauffé, ou rouleau d'étanchéité (15), et des moyens d'entraînement et/ou de contraste (11), par exemple un rouleau, dans lequel, près de la zone d'étanchéité, au moins le ruban d'étanchéité (14) reçoit un apport de chaleur qui peut le chauffer à la température souhaitée, ledit apport étant obtenu au moyen d'une dalle (17), **caractérisé en ce que** ledit apport de chaleur est associé à une action d'écartement transversal ou de tension du ruban d'étanchéité (14).

20. Procédé selon la revendication 19, **caractérisé en ce que** le positionnement du rouleau d'étanchéité (15) entraîne automatiquement la dalle (17).
